# EUROPEAN PATENT APPLICATION

(11) **EP 3 007 427 A1**
(43) Date of publication of application: **13.04.2016**
(21) Application number: 14805122.0
(22) Date of filing: 29.05.2014
(51) Int. Cl.: H04N 5/225

(54) **THERMAL IMAGERY DYNAMIC RECORDING DEVICE, THERMAL IMAGERY DYNAMIC PLAYBACK DEVICE, AND THERMAL IMAGERY DYNAMIC RECORDING AND PLAYBACK METHOD**

(30) Priority: 29.05.2013 CN 201310206968
(71) Applicant: Wang, Hao, Hangzhou, Zhejiang 310013 (CN)
(72) Inventor: Wang, Hao, Hangzhou, Zhejiang 310013 (CN)
(74) Representative: Isarpatent
(86) International application number: PCT/CN2014/078788
(87) International publication number: WO 2014/190920

(57) **Abstract**

This invention provides a device and method for dynamically recording thermal images, a replay device, and a replay method, relates to a thermal image photographing device, a thermal image processing device, and application fields of thermal image photographing. Since the thermal image detecting technique is applied, there is no proper means to conveniently and quickly determine key frames and associate object information during dynamic record. In the device and method for dynamically recording thermal images in the invention, according to selected object information, in response to a mark indication, a recording part can associate the marked thermal imaging data frame with the object information, record the association, and distinguish the marked thermal imaging data frame from other thermal imaging data frames during dynamic record, thus to record thermal images, thereby solving the present problems.

## Description

### BACKGROUND OF THE INVENTION

### Field of the Invention

The invention relates to a thermal image photographing device, a thermal image processing device, and application fields of thermal image photographing and, more particularly, to a device for dynamically recording thermal images, a replay device, a method for dynamically recording thermal images, and a replay method.

### Description of the Related Art

The present thermal image photographing devices mainly belong to a static photographing type. When a photographing button is pressed, the recorded thermal image document is a thermal image picture document. A photographing speed in use is slower, and the efficiency is lower, failing to measure moving objects and to describe large-scale objects.

The above problem can be solved by a thermal image photographing device in a dynamic photographing mode. However, the inconvenient operation such as examination and analysis is followed. Different from visible light, infrared thermal images of objects are similar, and the differences are difficulty to be distinguished. The common indicating boards or color marks on the scene fail to be examined in the infrared thermal images. For example, three-phase equipment A, B, C of power equipment may be almost the same in the infrared thermal image.

Thus, when a user needs to know a state of a specified object, since the dynamically photographed dynamic thermal image document includes a plurality of infrared thermal images corresponding to the different objects belonging to the same type, there are a certain amount of redundant frames and a large amount of similar frames, and since the thermal image picture document is targeted and photographed by users, the examination and analysis of the thermal image picture documents one by one is very inconvenient and with trouble operation. The prior art does not mention effective methods of the targeted quick examination of the specified object from the dynamic thermal image document including different kinds of objects, and does not mention the dynamic photographing technique of the corresponding thermal imaging data frames.

To distinguish a key thermal imaging data frame and obtained object information in the dynamic thermal image document to which the object corresponds, the users may need to manually record the time of the key frame and the corresponding information according to cognition of the object or nameplates on the scene, thereby causing inconvenient operation and errors, affecting the photographing speed, and increasing the subsequent sorting workloads. As the thermal image detecting technique is applied, there is no proper means to solve the problem.

A patent with an application number of 200410001328 disclosers a camera, and the camera associates object information and records the association by receiving an ID of a wireless label installed on the object. However, the installation of the wireless label is inconvenient, the cost increases, and the wireless label is not suitable for occasions with large electromagnetic interference. In addition, a GPS receiving part may be disposed in a thermal imaging device to inform GPS information of an object and to record the association, which is not suitable for the applicable occasions or indoor space with crowded objects under the limitation of the GPS distance measuring accuracy and positioning conditions.

### BRIEF SUMMARY OF THE INVENTION

The invention provides a device and method for dynamically recording thermal images, by marking key thermal imaging data frames during dynamic photographing and associating the thermal imaging data frames with object information, to improve the prior art.

This invention provides a device for dynamically recording thermal images including:
a photographing part for continuously photographing to acquire thermal imaging data frames;
a selecting part for selecting object information;
a recording part, in response to a dynamic record indication, for associating information related to the selected object information with continuously recorded infrared data frames and recording the association, based on the selected object information, the infrared data frames are the acquired thermal imaging data frames and/or data acquired after specified processing for the acquired thermal imaging data frames;
an operation part for performing mark operation by users;
the recording part, in response to a mark indication generated by the operation, for recording by distinguishing the marked infrared data frame from the unmarked infrared data frames.

Further, a device for dynamically recording thermal images includes:
a photographing part for continuously photographing to acquire thermal imaging data frames;
a recording part, in response to a dynamic record indication, for continuously recording infrared data frames, the infrared data frames are the acquired thermal imaging data frames and/or data acquired after specified processing for the acquired thermal imaging data frames;
a selecting part for selecting object information;
an operation part for performing mark operation by users;
the recording part, in response to a mark indication generated by the operation, for associating the marked infrared data frame and information related to the object information selected by the selecting part and recording the association.

Further, a device for dynamically recording thermal images includes:
an acquiring part for continuously acquiring thermal imaging data frames;
a selecting part for selecting object information;
a recording part, in response to a dynamic record indication, for associating information related to the selected object information with continuously recorded infrared data frames according to the selected object information and recording the association, the infrared data frames are the acquired thermal imaging data frames and/or data acquired after specified processing for the acquired thermal imaging data frames;
a marking part for giving a mark indication;
the recording part, in response to the mark indication, for recording by distinguishing the marked infrared data frame from the unmarked infrared data frames.

A replay device in the invention includes:
a thermal image selecting part for selecting a plurality of thermal imaging data frames;
a selecting part for selecting object information;
a mark replay part for displaying an infrared thermal image acquired by a marked frame associated with the selected object information, based on the selected thermal imaging data frames.

Further, a replay device in the invention includes:
a thermal image acquiring part for acquiring thermal imaging data frames;
a selecting part for selecting object information;
a replay part for playing an infrared thermal image acquired by the thermal imaging data frame related to the object information according to a specified frame frequency.

A method for dynamically recording thermal images in the invention includes:
a photographing step for continuously photographing to acquire thermal imaging data frames;
a selecting step for selecting object information;
a recording step, in response to a dynamic record indication, for associating information related to the selected object information with continuously recorded infrared data frames according to the selected object information and recording the association, the infrared data frames are the acquired thermal imaging data frames and/or data acquired after specified processing for the acquired thermal imaging data frames;
an operation step for performing mark operation by users;
the recording step, in response to a mark indication generated by the operation, for recording by distinguishing the marked infrared data frame from the unmarked infrared data frames.

A method for dynamically recording thermal images in the invention includes:
an acquiring step for continuously acquiring thermal imaging data frames;
a recording step, in response to a dynamic record indication, for continuously recording infrared data frames, the infrared data frames are the acquired thermal imaging data frames and/or data acquired after specified processing for the acquired thermal imaging data frames;
a selecting step for selecting object information;
a marking step for giving a mark indication;
the recording step, in response to the mark indication, for associating the marked infrared data frame and information related to the object information selected in the selecting step and recording the association.

A replay method in the invention includes:
a thermal image selecting step for selecting a plurality of thermal imaging data frames;
a selecting step for selecting object information;
a mark replay step for displaying an infrared thermal image acquired by a marked frame associated with the selected object information, based on the selected thermal imaging data frames.

In addition, this invention provides a computer program, especially a program executed in a thermal image photographing device, the computer program allows the thermal image photographing device to perform the following steps:
an photographing step for continuously photographing to acquire thermal imaging data frames;
a selecting step for selecting object information;
a recording step, in response to a dynamic record indication, for associating information related to the selected object information with continuously recorded infrared data frames according to the selected object information and recording the association, the infrared data frames are the acquired thermal imaging data frames and/or data acquired after specified processing for the acquired thermal imaging data frames;
an operation step for performing mark operation by users;
the recording step, in response to a mark indication generated by the operation, for recording by distinguishing the marked infrared data frame from the unmarked infrared data frames.

These and other aspects and advantages of the present invention are described with regard to the following description.

### BRIEF DESCRIPTION OF THE DRAWINGS

FIG. 1 is a block diagram showing a thermal imaging device 13 in the embodiments of the invention;
FIG. 2 is an outline diagram showing the thermal imaging device 13 in the embodiments;
FIG. 3 is a flow chart controlled by the thermal image photographing device in a first embodiment;
FIG. 4 is a schematic diagram showing an exemplary list of object information stored in a storage medium;
FIG. 5 is a schematic diagram showing a display interface of a specified amount of object indicating information and an infrared thermal image;
FIG. 6 is another schematic diagram showing display interfaces of a specified amount of object indicating information and infrared thermal images;
FIG. 7 is a flow chart in a second embodiment;
FIG. 8 is a schematic diagram showing a setting interface of a filter condition;
FIG. 9 is a schematic diagram showing an exemplary list of filtered object information according to the filter condition;
FIG. 10 is a schematic diagram showing the object indicating information acquired by the filtered object information and the infrared thermal image;
FIG. 11 is a flow chart showing determination of the object information;
FIG. 12 is a flow chart in a third embodiment;
FIG. 13 is a block diagram showing a system for dynamically recording thermal images including a thermal image processing device 100 and a thermal image photographing device 101;
FIG. 14 is a schematic diagram showing the system for dynamically recording thermal images including the thermal image processing device 100 and the thermal image photographing device 101;
FIG. 15 is a schematic diagram showing a display interface of a replay device in a fifth embodiment;
FIG. 16 is a flow chart in the fifth embodiment;
FIG. 17 is a schematic diagram showing time sequences of the thermal imaging data frames;
FIG. 18 is a schematic diagram showing a display interface of a replay device in a sixth embodiment.

### DETAILED DESCRIPTION OF THE INVENTION

Embodiments of the invention are described hereinbelow. In a first embodiment of the invention, a portable thermal imaging device 13 with a thermal image photographing function as a device for dynamically recording thermal images is taken for example. However, in other examples, a processing device continuously receiving thermal imaging data frames, such as a personal computer, a personal digital processing device, or other processing devices, may be as the example of the device for dynamically recording thermal images.

In the embodiment, the called thermal imaging data frame may be thermal image AD value data (also called AD value data or AD value). However, the invention is not limited thereto. In other embodiments, the thermal imaging data frame may be image data of infrared thermal images, array data of temperature values, thermal imaging data frames formed by digital signals output from the interior of an infrared detector, or mixed data thereof, or data acquired by mixing and compressing one or more thereof.

The embodiments of the invention are described according to drawings in detail. The embodiments described hereinbelow are used for understanding the invention better and do not limit the scope of the invention, and different modes may be changed in the scope of the invention.

### Embodiment one

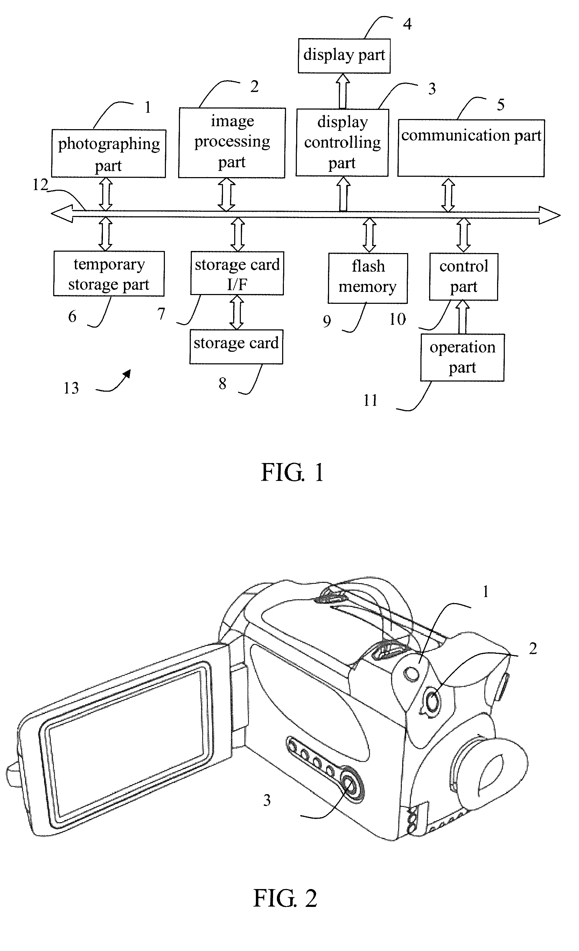

FIG. 1 is a block diagram showing a thermal imaging device 13 according to the first embodiment. FIG. 2 is an outline diagram showing the portable thermal imaging device 13 according to the first embodiment.

The thermal imaging device 13 includes a photographing part 1, an image processing part 2, a display controlling part 3, a display part 4, a communication part 5, a temporary storage part 6, a storage card I/F 7, a storage card 8, a flash memory 9, a control part 10, and an operation part 11. The control part 10 is connected with the corresponding parts via a control and data bus 12, and is responsible for overall control of the thermal imaging device 13.

The photographing part 1 includes an optical part, a lens driving part, an infrared detector, and a signal preprocessing circuit, which are not shown. The optical part is composed of infrared optical lens, and is used for focusing received infrared radiation on the infrared detector. The lens driving part drives the lenses to perform focusing or zooming operation according to a control signal of the control part 10, and the optical part may also be manually regulated. The infrared detector, such as a refrigerating or non-refrigerated infrared focal plane detector, converts the infrared radiation passing through the optical part to electrical signals. The signal preprocessing circuit, including a sampling circuit, an AD conversion circuit, and a timing trigger circuit, performs signal processing such as sampling the electrical signals output from the infrared detector in a specified period and acquiring digital thermal imaging data frames via the conversion of the AD conversion circuit. The AD value data included by the thermal imaging data frame may be 14-bit or 16-bit binary data. The thermal imaging data frame is not limited to inherent resolution of the infrared detector, or may be lower or greater than the resolution of the infrared detector. In the first embodiment, the photographing part 1 as an example of an acquiring part is used for continuously acquiring the thermal imaging data frames.

The image processing part 2 is used for performing specified processing for the thermal imaging data frames acquired by the photographing part 1. The processing of the image processing part 2 may be modification, interpolation, pseudo-color, compression, or decompression, which is the processing for converting to the data suitable for display and record. The thermal imaging data frames may generate the infrared thermal images by pseudo-color processing. In detail, in one embodiment, a corresponding range of a pseudo-color plate is determined according to a range of AD values or a setting range of the AD values of the thermal imaging data frames, and the particular color value to which each AD value of the thermal imaging data frames corresponds in the range of the pseudo-color plate is used as the image data of the corresponding pixel position in the infrared thermal image. In addition, based on the control of the control part 10, the image processing part 2 is used for compressing the thermal imaging data frames to acquire the compressed thermal imaging data according to the specified compression, and then the thermal imaging data frames are recorded to a record medium such as the storage card 8. The image processing part 2 may be realized by a DSP, other microprocessors, or a programmable FPGA, or may be a microprocessor integrally formed with the control part 10.

The display controlling part 3 allows the image data stored in the temporary part 6 to be displayed on the display part 4, based on the control of the control part 10. For example, in a normal mode, the infrared thermal images generated by the thermal imaging data frames acquired by photographing are displayed continuously; in a dynamic recording mode, the object indicating information and infrared thermal images are displayed. In addition, different kinds of setting information may also be displayed. In detail, in one embodiment, the display controlling part 3 may include a VRAM, a VRAM control unit, and a signal generating unit. Based on the control of the control part 10, the signal generating unit reads image data, read from the temporary storage part 6 and stored in the VRAM, regularly from the VRAM via the VRAM control unit, and generates display signals such as video signals output to be displayed on the display part 4. In the embodiment, the display part 4 is as an example of a display part. In addition, the display part 4 may further be other display devices connected with the thermal imaging device 13, while the thermal imaging device 13 may not include the display device in itself. Obviously, when the thermal imaging device 13 do not include the display device in itself, the control part 10 can also control the image data to be displayed and output. For example, the image data to be displayed (the control part 10 and the display controlling part 3 are as an example of an display controlling part) may be output via an image output interface (such as different kinds of wired or wireless image output interfaces i.e. an AV port or RJ45 port), and the display controlling part may control to allow the display part to display the output situation. The display controlling part 3 may be integrally formed with the image processing part 2 or the control part 10.

The communication part 5 may be an interface for connecting the thermal imaging device 13 and an external device such as an external computer, an external storage device, or other thermal imaging device, according to communication specifications such as USB, 1394, or network.

The temporary storage part 6, such as a volatile storage i.e. RAM or DRAM, is a buffer storage for temporarily storing the thermal imaging data frames output from the photographing part 1, and based on the control of the control part 10, repeats the following processing, that is, to temporarily store the specified time portions of the acquired thermal imaging data frames and to store the new thermal imaging data frame after deleting the previous frame when the acquiring part (the photographing part 1) acquires the new frame. Meanwhile, the temporary storage part 6 is a working storage of the image processing unit 2 and the control part 10 for temporarily storing the data processed by the image processing part 2 and the control part 10. However, the invention is not limited thereto. A storage or register included by a processor such as the control part 10 or the image processing part 2 may also be defined as a temporary storage part.

The storage card I/F 7 is used as an interface of the storage card 8. The storage card I/F 7 is connected with the storage card 8 as a rewritable nonvolatile storage, which can be detachably installed in a groove of the main body of the thermal imaging device 13 and can record data such as the thermal imaging data frames according to the control of the control part 10.

The flash memory 9 is used for storing control programs and different kinds of data used in different control. A storage medium for storing the object information in the embodiment, may be a storage medium in the thermal imaging device 13, such as a nonvolatile storage medium i.e. the flash memory 9 and the storage card 8 or a volatile storage medium i.e. the temporary storage part 6, and further may be other storage mediums connected with the thermal imaging device 13 wiredly or wirelessly, such as other storage devices wiredly or wirelessly connected with the communication part 5 or storage mediums in other photographing devices or computers. Preferably, the data related to the object, such as the object information, may be prestored in the thermal imaging device 13 or the nonvolatile storage medium connected with the thermal imaging device 13. In the embodiment, the flash memory 9 is as an example of the storage medium for storing the object information.

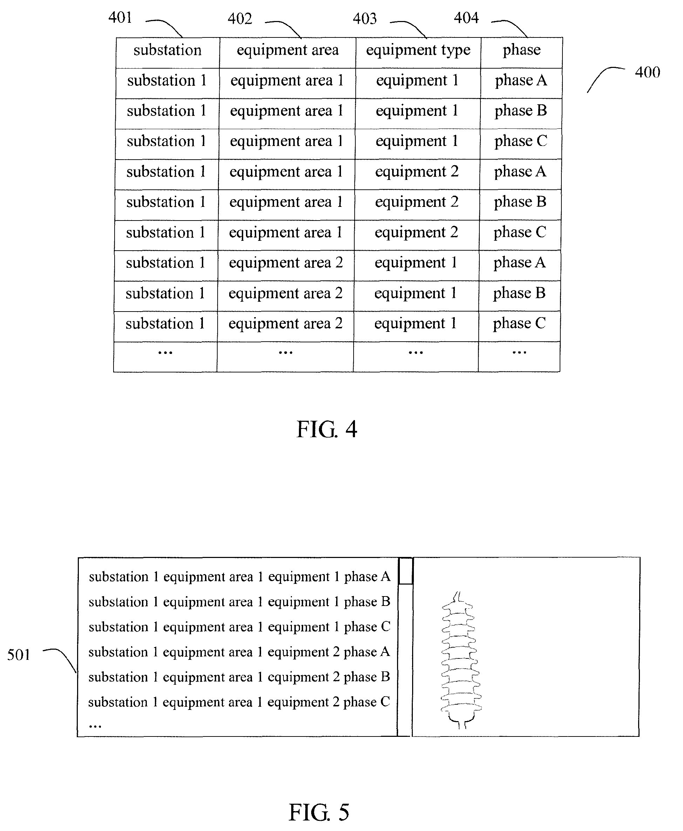

The object information is the information related to an object, such as the information representing a position, a type, and a number of the object. In addition, different kinds of information, such as an attribution unit, a classified grade (such as a voltage grade or an importance grade), a model, a manufacturer, performance and characteristics, a passed photographing or repairing record, a manufacturing date, or a service life, related to the object, may be taken for example. Preferably, the object information may be composed of different classified information. In FIG. 4, an exemplary list shows object information stored in the storage medium. Each of the object information is composed of attribute information of some specified attributes. For example, the object information 400 "substation 1 equipment area 1 equipment 1 phase A" may include the attribute information "substation 1" to which a substation attribute 401 corresponds, the attribute information "equipment area 1" to which an equipment area attribute 402 corresponds, the attribute information "equipment 1" to which an equipment type attribute 403 corresponds, and the attribute information "phase A" to which a phase attribute 404 corresponds. However, the invention is not limited thereto. The object information may be stored in other modes such as including the single attribute information. In the first embodiment, the object information includes the information representing a position (such as a substation, an equipment area), a type (such as a type including an equipment 1 and an equipment 2, an equipment type including a switch and a cable head), and a phase (such as phase A, B, C) of the object. According to different applications, the object information may be different.

The operation part 11 is provided for users to perform different kinds of indication operation, such as dynamic record operation (such as a dynamic record key 1), dynamic record pause/play operation (such as a pause key 2), and mark operation (such as a mark key 3), or to input setting information such as a record frame frequency, and the control part 10 performs the corresponding programs according to the operation signals from the operation part 11. The operation part 11 includes a dynamic record key 1 (configured for the dynamic record operation), a pause key 2, a mark key 3, and a cross key, as shown in FIG. 2. In addition, a touch screen or a phonic part (not shown) may be used for realizing the corresponding operation.

The control part 10 controls the whole action of the thermal imaging device 13. The storage medium such as the flash memory 9 stores the control programs and different data used in different control. A CPU, a MPU, a SOC, or a programmable FPGA may realize the control part 10.

The control part 10 as a selecting part is used for selecting the object information. For example, the control part 10 may select the object information in response to the selecting operation of the users. In addition, the selection may be performed in a defaulted mode. For example, the last object information selected in the previous starting time may be selected. Obviously, the object information with multiple attributes may be selected for a plurality of times.

The control part 10 as a recording part is used for continuously recording the acquired thermal imaging data frames in response to a dynamic record indication. In detail, for example, in response to the dynamic record indication, at the moment of the recording fixed time, the thermal imaging data frames (such as the thermal imaging data frames instantly photographed and stored in a specified area of the temporary storage part 6) to be recorded may be selected from the thermal imaging data frames temporarily stored in the temporary storage part 6 and may be recorded after specified processing such as modification, interpolation, and compression. Preferably, the thermal imaging data frames may be recorded to a nonvolatile storage medium such as the flash memory 9 or a storage card, or may be recorded to other storage mediums communicated with the thermal imaging device 13 via the communication part 5.

Different from visible light photographing, since the thermal imaging data frames acquired by thermal image photographing are mainly for subsequent analysis, to protect the subsequent replay dynamic effects, the record can be performed at a lower frame frequency (usually a record frame frequency of 3-15 frames per second), thus to ensure the dynamic record processing for the large data volume of the thermal imaging data frames and to reduce the load of the processors. Therefore, in one preferred embodiment, in response to the dynamic record indication, the control part 10 as the recording part is used for continuously recording the acquired thermal imaging data frames according to a specified record frame frequency.

Further, the recording part can respond to the mark indication during dynamic record or at the dynamic record stopped state, and can record by distinguish the marked thermal imaging data frame from the unmarked thermal imaging data frames. The marked thermal imaging data frame may be the thermal imaging data frame corresponding to the fixed time of the specified record frame frequency, such as, the record frame at the moment of the record fixed time before responding to the mark indication, or the frame at the moment of the record fixed time after responding to the mark indication, and at that moment, supposing that one frame may be recorded in 1/6 second (the specified record frame frequency is 6 frames per second), six thermal imaging data frames may be recorded in one second.

Further, the marked thermal imaging data frame is not necessary to the frame corresponding to the record fixed time. There are multiple embodiments. In one example, the thermal imaging data frame to be record or marked may be selected from the temporary storage part 6. For example, when the thermal imaging data frame is recorded according to the specified record frame frequency (supposing that it is 6 frames per second, that is one frame is recorded in 1/6 second), the mark indication is responded, the instantly photographed thermal imaging data frame is read from the temporary storage part 6 to be recorded and marked, while the marked thermal imaging data frame is not the thermal imaging data frame corresponding to the fixed time of the specified record frame frequency. Thus, when the mark key 3 is pressed, seven thermal imaging data frames may be recorded in one second, and one of them is the marked frame. In another example, in response to the mark indication, the next thermal imaging data frame acquired by photographing may be recorded and marked.

There are multiple embodiments for selecting the thermal imaging data frame to be marked. For example, based on the multiple thermal imaging data frames remained in the temporary storage part 6, the marked frame may be the frame with the maximum temperature value acquired by analysis or the thermal imaging data frame with the least vibration therein. The marked frame may be selected from the thermal imaging data frames remained in the temporary storage part 6 at the moment of responding to the mark operation or after a specified time period of that moment. Preferably, the thermal imaging data frame acquired at the moment of stopping dynamic record and holding the pause indication may be marked. One or more frame may be marked. The marked infrared data frame can be acquired after specified processing for one or more thermal imaging data frame.

The marked thermal imaging data frame is distinguished from the unmarked thermal imaging data frames. There are multiple embodiments. The modes or formats of the recorded documents may be different, record may be performed at different areas of the same document, record may be performed at different record mediums, record may be performed at different storage areas of the same storage medium, associated information during recording may be different, corresponding document management information may be different, or processing modes of the thermal imaging data frames may be different (such as different compression).

For example, the marked thermal imaging data frame and the unmarked thermal imaging data frames are recorded in one dynamic thermal image document. In one embodiment, the marked thermal imaging data frame and the unmarked thermal imaging data frame may be associated with distinguishable additional information. In another embodiment, the marked thermal imaging data frame and the unmarked thermal imaging data frame may correspond to different document management information. For example, the mark management information stored in a specified area of the dynamic thermal image document, may include the frame time sequence information of the marked thermal imaging data frame, such as the time of the marked thermal imaging data frame, the frame number of the marked thermal imaging data frame in the dynamic thermal image document, and the address of the marked thermal imaging data frame in the dynamic thermal image document, while the content and storage area of the management information of the unmarked thermal imaging data frame are different. In the third embodiment, a management document, including the frame time sequence information of the marked thermal imaging data frame, can be generated additionally, and it may be distinguishable from the management document of the unmarked marked frame, such as by different document extension names.

In addition, the unmarked thermal imaging data frames (or with the marked thermal imaging data frame) may generate a dynamic thermal image document. In addition, the marked thermal imaging data frame may generate a thermal image picture document. For example, a plurality of the marked thermal imaging data frames may generate another dynamic thermal image document with a document extension name different from that of the dynamic thermal image document including the unmarked frames.

According to different application, one or more kinds of the distinguishable way may be configured, to facilitate subsequent examination and analysis.

The control part 10 as a marking part is used for giving a mark indication. For example, in response to operation of users, the mark indication may be given. In addition, the mark indication may be given, when the temperature of the thermal imaging data frame exceeding a threshold is analyzed (correspondingly, the thermal imaging device 13 includes a temperature analyzing part and a determining part for determining if the threshold is exceeded), when there is an external triggering signal, or when other specified fixed time is satisfied.

The detailed operation and control flows in the first embodiment are described hereinbelow. Before the formal photographing, the flash memory 9 stores a task data document of the object information of a substation 1 as shown in FIG. 4 in advance. The applicable scene may be to photograph the objects in the substation. Based on the control programs and different data used in different control stored in the flash memory 9, the control part 10 controls the whole action of the thermal imaging device 13 and different modes. After the power is on, the interior circuit of the control part 10 is initialized. Then, a standby photographing mode is entered. That is, the photographing part 1 acquires the thermal imaging data frames via continuous photographing, the image processing part 2 performs specified processing for the thermal imaging data frames instantly acquired by the photographing part 1, the acquired thermal imaging data frames are stored in the temporary storage part 6, and the control part 10 controls to continuously display infrared thermal images in a dynamic image mode on the display part 4. In this state, the control part 10 continuously monitors if other modes are switched according to the predetermined operation or the shutdown operation is performed. If yes, the corresponding control is performed.

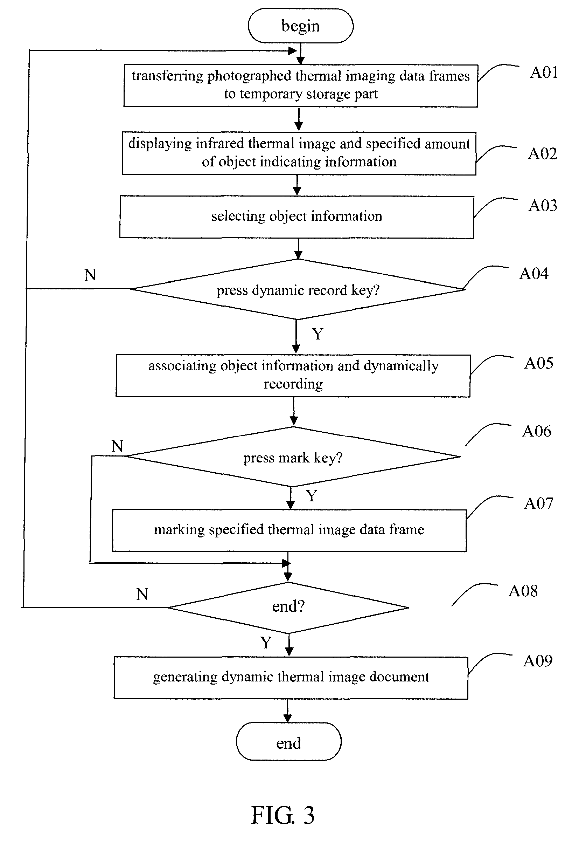

Referring to FIG. 3, the control steps of a dynamic record mode are described.

In step A01, the thermal imaging data frames are acquired by photographing, and the thermal imaging data frames, acquired by the photographing part 1, are transferred to the temporary storage part 6.

In step A02, the display controlling part (the control part 10) controls to allow the display part 4 to display the infrared thermal image generated by the acquired thermal imaging data frames and the object indicating information acquired by a specified amount of the object information.

In detail, in one embodiment, the image processing part 2 is controlled to synthesize the image data of the infrared thermal image generated by the photographed thermal imaging data frames and the image data of the object indicating information generated by a specified amount of the object information in the object information in FIG. 4 stored in the flash memory 9. The synthesized image data is stored in the temporary storage part 6. Then, the synthesized image data is displayed on the display part 4. The display interface is as shown in FIG. 5.

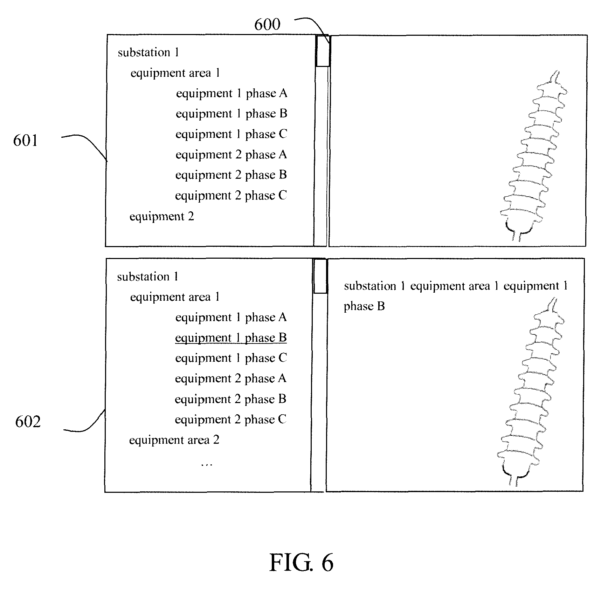

When a user operates a scroll bar, according to an adjusting amount and a rolling direction, the specified amount of the object information is determined again. The control part 10 determines if the user performs the adjusting operation, such as, if a scroll bar 600 in FIG. 6 is dragged to adjust the display of the object indicating information or if the pages are turned via the operation part, and if yes, according to the adjusting amount of the scroll bar by the user, the specified amount of the object information after adjustment is determined, and then the corresponding object indicating information is displayed.

In one preferred mode, the display controlling part displays the specified information for generating the object indicating information in the object information in a layered mode according to specified positions. In detail, the display controlling part includes a layered structure distributing unit for distributing layers of a layered structure and attribute information to which each layer corresponds. Based on the attribute information of the object information stored in the storage medium, the attribute information of the object information is displayed according to the layers of the layered structure and the attribute information to which each layer corresponds, distributed by the layered structure distributing unit. For example, in a display window 601 of the object indicating information in the display interface as shown in FIG. 6, the display controlling part may distribute the object information into three layers according to the attribute information of the specified attributes representing a substation, an equipment area, an equipment type, and a phase, and may display the object indicating information according to the specified positions. Compared with a display window 501 of the object indicating information in the display interface as shown in FIG. 5, the letters in the same row in FIG. 6 decreases, thereby facilitating examination and selection of the users.

The object indicating information acquired according to the object information may be acquired according to the whole or specified part information of the object information, and the information for acquiring the object indicating information in the object information may be predetermined.

In step A03, the object information is selected. The selection of the object information may be performed before the dynamic record or during the dynamic record. Otherwise, the dynamic record may be paused for selection of the object information, and then the dynamic record may recover. For example, when a user selects "substation 1 equipment area 1 equipment 1 phase B" displayed in 601 in FIG. 6 via the operation part 11 according to the cognition of the object "substation 1 equipment area 1 equipment 1 phase B" on the scene, such as by checking the equipment indicating plate, the selecting part (the control part 10) selects the object information corresponding to the object indicating information in response to the selection of the user. For example, the selected object information "substation 1 equipment area 1 equipment 1 phase B" may be held in a specified area (the specified area for holding the selected object information) of the temporary storage part 6, and may replace the previously selected object information. When there is the object information held in the specified area, the object information is the selected object information, and when there is no object information, it represents that the object information is not selected. Otherwise, the selected object information may be attached by marks to be distinguished from other object information.

Further, the display controlling part controls to specially display the object indicating information acquired by the object information. In the embodiment, the special display may be to display the object indicating information in a way that a user may cognize the selected object indicating information from the specified amount of the object indicating information, such as the special display mode by distinguishing from other object indicating information via the difference of a displaying position, a color, a background, a size, a font, a content, or word description. In a display window 602 of the object indicating information in FIG. 6, the control part 10 controls the "equipment 1 phase B" selected by the user to be marked by an underline, to distinguish from other object indicating information. Further, the object indicating information acquired by the selected object information may overlap the infrared thermal image, as shown in a thermal image display window 602 in FIG. 6. Further, the content of the specially displayed object indicating information may be different from that of other object indicating information, it may include more information such as manufacturers, or may include less object indicating information, such as only "phase B".

The information such as the substation 1 or the equipment area 1 may be selected as the object information.

In step A04, if there is a dynamic record indication is determined. For example, when a user presses the record key 1, the next step is performed.

In step A05, the dynamic record associated with the object information is performed. For example, the thermal imaging data frames to be recorded, read from the specified area of the temporary storage part 6, may be associated with the selected object information, and may be written to the dynamic thermal image document built at the starting time of dynamic record in the storage medium. In one preferred embodiment, the recording part may be used for continuously recording the thermal imaging data frames continuously photographed by the photographing part according to the specified record frame frequency, to the nonvolatile storage medium (such as the flash memory 9).

In detail, in one embodiment, at the moment of the specified record fixed time (such as 1/6 second when the record frame frequency is 6 frames per second), the thermal imaging data frame to be recorded may be selected and read from the thermal imaging data frames stored in the temporary storage part 6. For example, the instantly acquired thermal imaging data frames (the newly transferred to the temporary storage part 6) may be read from the specified area of the temporary storage part 6. Then, the specified processing, such as modification, interpolation, pseudo-color, temperature value conversion, cutting, pixel reduction, compression, or a combination thereof, may be performed. The thermal imaging data frame and the selected object information or necessary additional information (such as the time of the thermal imaging data frame, a radiation ratio of photographing, an environment parameter temperature, humidity, a photographing distance, a specified processing algorithm, or parameters related to the processing algorithm) may be written to the dynamic thermal image document built in the storage medium such as the flash memory 9. The data acquired after specified processing for the thermal imaging data frame may be one or more data acquired according to the above conditions. For example, the temperature values of each pixel and the image data of the infrared thermal image acquired based on the thermal imaging data frame may be recorded at the same time.

If the object information is not selected, the dynamic record without associating the object information may be performed.

The information related to the selected object information may be all or part of the information of the object information as the selected object information, such as, "substation 1 equipment area 1 equipment 1 phase B", "equipment area 1 equipment 1 phase B", or other information of the object information that is not displayed. For example, the object information may further include information such as a type, a model, and an ID number, which is not displayed, while the type, model, ID number, or a combination thereof may be recorded. Obviously, the substation 1 may be selected as the associated information of all data frames in the whole thermal image document.

The additional information such as the object information may be written to the thermal imaging data frame as head information of the thermal imaging data frame. However, the invention is not limited thereto. There are associating modes different from the above mode of the object information. For example, the frame time sequence information of the thermal imaging data frame recorded in step A06 and the object information may be together as management information, as one part of the necessary document additional information, and may be written to the dynamic thermal image document. Otherwise, the information document or index document associated with the dynamic thermal image document may be generated, and the index document includes the frame time sequence information of the frames associated with the object information and the associated object information. The control part 10 can generate the information document or index document, without being written to the thermal imaging data frames. The substance of the associated record is to record the information facilitating the subsequent batch processing.

In step A06, if there is a mark indication is determined. If no, jump to step A08, and if yes (for example, a user presses the mark key 3), the next step is performed.

In step A07, the mark information is attached to the thermal imaging data frames recorded in the step A05. For example, a data bit "0" as the mark may be attached to the additional information of the marked thermal imaging data frame. In another way, the mark such as a watermark may be written to the data of the marked frame.

In addition, the frame time sequence information of the marked frame may be as the management information and as the part of the necessary document additional information, and may be written to the dynamic thermal image document in a way distinguishable from that of the management information of other frames. Otherwise, the index document associated with the dynamic thermal image document may be generated, and the index document may include the frame time sequence information of the marked frame.

In step A08, if the dynamic record is end is determined. If yes, for example, a user performs operation to end the dynamic record, in step A09, the necessary document additional information (such as an end mark) is written to the dynamic thermal image document, to finish the dynamic thermal image document.

If no, return to the step A01. The user may mark for a plurality of times, or may select the new object information again. When the object information is selected again, since the record key 1 is previously pressed, the dynamic record continues. In the step A05, the reselected object information is associated with the thermal imaging data frame, and the association is recorded.

In addition, there are multiple attached modes of the mark information different from that in the step A07. For example, when the marked frame is recorded to a thermal image picture document, the thermal image document name may be generated according to the object information selected by the selecting part. Preferably, the recording part includes a document name generating unit for generating the document name of the thermal image document, and the generated document name of the thermal image document includes information related to the object information selected by the selecting part. For example, the generated thermal image document name may be substation 1 equipment area 1 equipment 1 phase B.JPG, and further, the document name may be generated with the combination of time information ``20120222", such as substation 1-equipment area 1-equipment 1-phase B-20120222.JPG. During the step A07, the thermal image picture document may be additionally generated, or the dynamic record may be paused for generating the thermal image picture document. Otherwise, the marked thermal imaging data frame and the associated object information may be temporarily stored in the specified area of the temporary storage part 6, and the dynamic record may be paused for generating a plurality of corresponding thermal image picture documents when the specified condition achieves, such as, the specified amount of the thermal imaging data frames are stored.

According to the above, based on the prestored object information, as the infrared thermal image is displayed with the object indicating information, the selection of a user is facilitated during the dynamic record, thus to improve the photographing efficiency and to reduce the work strength. As the key frame is marked, the subsequent search of the key frame is convenient. The search of the object information, especially the search of the marked frame, facilitates the targeted play, fully reflecting the advantages and effects of dynamic photographing.

### Embodiment two

According to the thermal imaging device 13 in the second embodiment, before the formal photographing, the flash memory 9 prestores the task data document of the object information of the substation 1 as shown in FIG. 4, and stores the task data document including the object information of other substations. The applicable scene is to photograph the object 1 of the substation 1. In the past, due to different detecting purposes, there is the detection of all objects in the substation and the detection of the objects of the specified type. The objects of the specified type are distributed in different equipment areas, and the objects need to be searched by users, which is inconvenient. If the object information is as a filter condition, the photographing of the users may be facilitated.

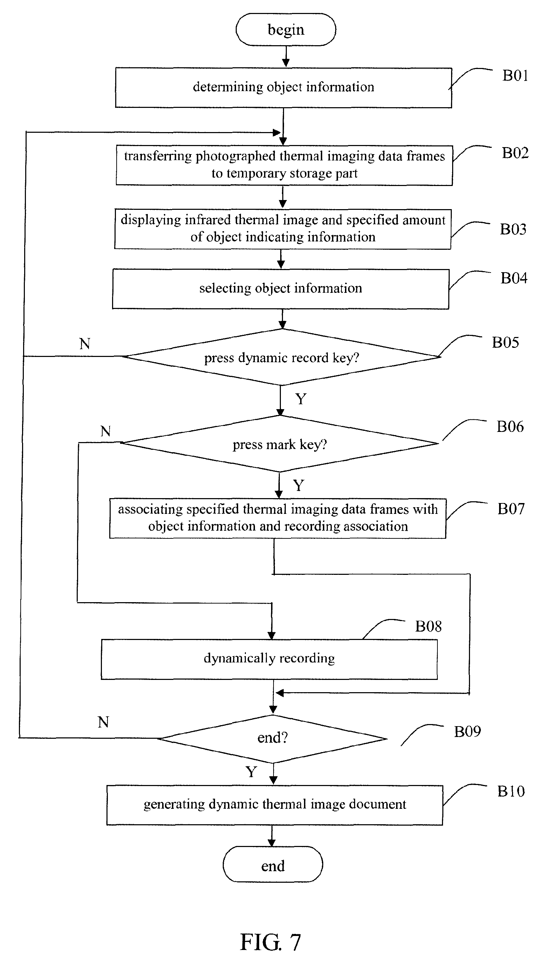

Referring to FIG. 7, the control flows of the thermal imaging device 13 are described.

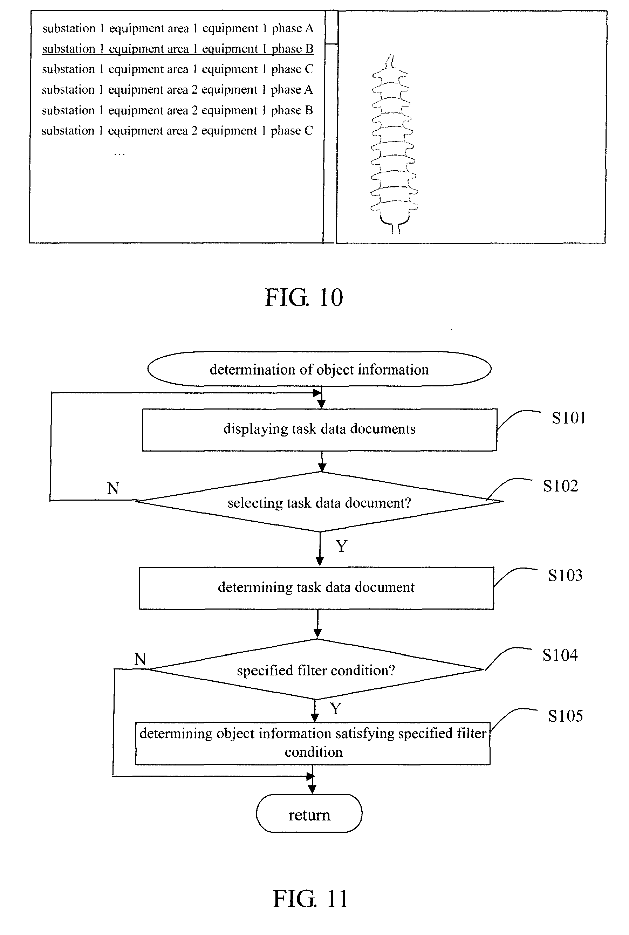

In step B01, a task determining part determines the object information, and the object information may be selected from the determined object information. The description of FIG. 11 may be referred.

In step B02, the thermal imaging data frames are acquired, and the thermal imaging data frames, photographed by the photographing part 1, are transferred to the temporary storage part 6.

In step B03, the display controlling part controls to allow the display part 4 to display the infrared thermal image generated by the acquired thermal imaging data frames and to display the object indicating information acquired by the specified amount of the object information based on the object information determined by the task determining part.

In step B04, the object information is selected. In the embodiment, "substation 1 equipment area 1 equipment 1 phase B" is selected.

In step B05, if there is a dynamic record indication is determined. If no, return to the step B02 and repeat the above steps, and if yes, perform the next step.

In step B06, if there is a mark indication is determined. If yes (for example, a user presses the mark key 3), perform the next step, and if no, jump to step B08.

In step B07, the marked frame and the selected object information is associated and record.

For example, at the moment of the specified record fixed time (such as 1/6 second when the record frame frequency is 6 frames per second), the thermal imaging data frames to be recorded may be selected and read from the thermal imaging data frames stored in the temporary storage part 6, such as reading the newly acquired thermal imaging data frames from the specified area of the temporary storage part 6. The specified processing such as modification, interpolation, cutting, compression, or a combination thereof may be performed. The specified processing may be omitted. The thermal imaging data frames and the additional information related to the mark such as the selected object information may be written to the dynamic thermal image document built in the storage medium such as the flash memory 9.

In addition, whether the specified record fixed time reaches is not determined, the thermal imaging data frames to be recorded may be selected and read from the thermal imaging data frames stored in the temporary storage part 6, such as reading the newly acquired thermal imaging data frames from the specified area of the temporary storage part 6, and the thermal imaging data frames and the additional information related to the mark may be written to the dynamic thermal image document built in the storage medium such as the flash memory 9. Then, the timing of the specified record frame frequency may be restarted.

In step B08, the dynamic record processing is performed according to the specified frame frequency. Different from the first embodiment, in this embodiment, when there is no mark indication, the recorded thermal imaging data frame is not associated with the object information.

Otherwise, when the object information is selected, the object information different from that of the marked key frame is associated. For example, when there is no mark indication, "substation 1" may be associated, and when there is the mark indication, "substation 1 equipment area 1 equipment 1 phase B" may be associated.

In step B09, if the process is end is determined.

If yes, in step B10, the necessary document additional information and the end mark may be written to the dynamic thermal image document, to finish the dynamic thermal image document.

Referring to FIG. 11, the determination of the specified amount of the object information by the task determining part is described.

In step S101, document names of the task data documents in the flash memory 9 are displayed, and then step S102 is performed. Usually the objects in different photographing destinations may be distributed to several task data documents. For example, according to the substation, the equipment names in each substation may be arranged in one task data document in advance.

In step S102, if a user selects one of the document names is determined. If one or more is selected, perform step S103, and if no, return to the step S101.

In step S103, then, according to the selection of the user, the task data document related to photographing is determined.

In step S104, then, the task determining part determines if there is a specified filter condition. If yes, perform step S105. If no, the object information in the selected task data document is determined.

In step S105, if there is the filter condition, according to the specified filter condition, the object information satisfying the filter condition in the task data document is determined.

In the above embodiment, the object information is distributed to a plurality of task data documents. If the object information is stored via a database or a task data document, the steps S101-S103 may be omitted.

Preferably, the thermal imaging device 13 includes a filter condition setting part (such as including the control part 10, the operation part 11, and the display part 4) for setting filter conditions by users and a task determining part for determining the object information satisfying the filter condition according to the filter condition based on the object information stored in the storage medium.

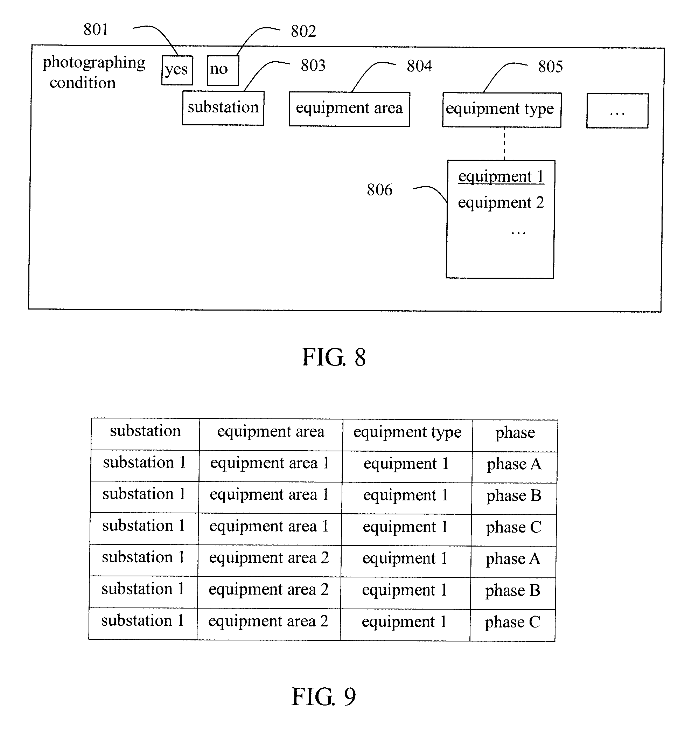

Referring to FIG. 8, the setting operation of the filter condition is described. When a user enters into a menu mode, after the user selects "filter setting'', the display part 4 displays a filter condition setting interface as shown in FIG. 8.

The filter condition includes keywords and filter logic relation related to the filter condition. The filter condition setting part includes a keyword determining unit and a logic determining unit. The keyword determining unit is used for determining the keywords related to the filter condition. The logic determining unit is used for determining the filter logic relation of the keywords related to the filter condition.

The keyword related to the filter condition may be one keyword or a plurality of keywords. The multiple keywords may represent a keyword range, such as a number range, a letter range, and a time range. In addition, when the object information includes different information related to the object, such as an attribution unit, a classified grade (such as a voltage grade or an importance grade), a model, a manufacturer, performance and characteristics, a passed photographing or repairing record, a manufacturing date, or a service life, the filter condition may be set by determining the keyword therein. However, the above information may not be used for generating the specially displayed object indicating information.

The keyword determining unit is used for determining the keywords related to the filter condition. For example, the keywords related to the filter condition may be determined according to the following one or more embodiments. In one embodiment, the keywords may be prestored, and the keywords related to the filter condition may be determined based on the selection of a user. In one embodiment, one or all of the keywords related to the filter condition may be default. In one embodiment, a user may key in the keywords, and the keywords keyed by the user may be determined as the keywords related to the filter condition. In one embodiment, a selection option of keyword attributes may be provided for selection, and based on the keyword attribute selected by a user, the keyword satisfying the keyword attribute may be determined as the keyword related to the filter condition. In one preferred embodiment, based on the stored object information, the keyword of the attribute information of the specified attribute in the object information may be enquired and acquired, and based on selection of a user, the keyword related to the filter condition may be determined.

The detailed setting operation of the filter condition is described with the example of photographing the object of "equipment 1" type by a user. In detail, the display part 4 displays the filter condition setting interface as shown in FIG. 8, with a substation 803, an equipment area 804, and an equipment type 805, which are configured as keyword menu options representing keywords of the attribute information of the specified attribute. When the object information as shown in FIG. 4 is stored, based on the equipment type 805 selected by a user according to "equipment 1" photographed at this time, the control part 10 enquires the object information stored in the storage medium to acquire keywords "equipment 1, equipment 2, ..." of the attribute information of the specified attribute (the equipment type), thus to display a list 806, and by selecting "equipment 1" therein by the user, the keyword determining unit determines "equipment 1" as the keyword related to the filter condition.

In addition, the attribute information selected in the previous keyword menu option may be as the filter condition of the subsequent keyword menu option. For example, when a user selects the substation 803, the list of the substation may be displayed, and the substation 1 is selected therein. When the equipment type 805 is selected, the list of the equipment type satisfying the substation 1 is only displayed.

The logic determining unit is used for determining the filter logic relation of the keywords related to the filter condition. The filter logic relation may be the filter true or false relation when the keyword related to the filter condition is one single keyword, or a combination of the AND-OR-NOT logic relation among the multiple keywords and the filter true or false relation when the keywords related to the filter condition are a plurality of keywords. The filter true or false relation and the logic relation of the keywords may be default or may be determined according to settings of the users.

In FIG. 8, the options "yes" 801 and "no" 802 of a photographing condition, are used for setting the filter true or false relation. When "yes" is selected, the filter condition generated by the keyword "equipment 1" combined with the option, is used for subsequently searching and determining the object information satisfying "equipment 1" as a photographing task. When "no" is selected, the filter condition generated by the keyword "equipment 1" combined with the option, is used for subsequently searching and determining the object information which does not satisfy "equipment 1". In the embodiment, the logic determining unit determines the filter true or false relation as "yes" according to the defaulted filter true or false relation "yes". Then, when a user operates the operation part 11 to determine the task, the object information satisfying the keyword "equipment 1" may be searched as the determined object information. Obviously, the multiple keywords may be selected as the filter condition.

The filter condition may be determined according to settings of the users (not shown) or may be prestored. The filter condition generated according to the settings of the users may be recorded to the temporary storage part 6 or the flash memory 9 as configuration documents for subsequent use.

The object information in FIG. 9 may be the object information satisfying the filter condition "equipment 1" determined by the task determining part (the control part 10) based on the object information in FIG. 4 stored in the storage medium.

The display interface in FIG. 10 shows the object indicating information acquired according to the object information after filter. Obviously, the object indicating information which the users need to select is limited to the equipment type of "equipment 1", thereby simplifying the operating and avoiding errors.

According to the above, based on the setting of the filter condition, the users can filter the photographed object in advance, to reduce the object indicating information for selection, simplifying the operation. Since the marked thermal imaging data frame is associated with the selected object information, the subsequent search and batch processing may be facilitated.

### Embodiment three

The thermal imaging device in the third embodiment can perform the selection of the object information in a state that the dynamic record is paused and the display is frozen.

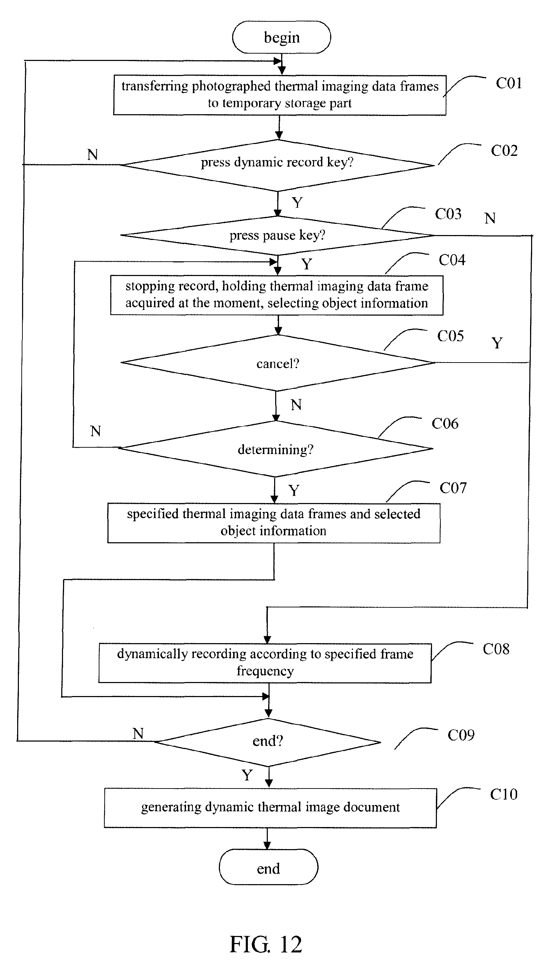

Referring to FIG. 12, the control flows of the thermal imaging device 13 are described.

In step C01, the thermal imaging data frames are acquired and the thermal imaging data frames acquired by the photographing part 1 are transferred to the temporary storage part 6.

Otherwise, the thermal imaging data frames instantly photographed by the photographing part 1 and the specified amount of the object information may be read from the temporary storage part 6 and may be displayed after display processing.

In step C02, if there is a dynamic record indication (such as, if the record key 1 is pressed) is determined. If no, return to the step C01 and repeat the above step, and if yes, perform the next step.

In step C03, if there is a pause indication is determined. If no, jump to step C08 and perform the dynamic record, and when a user presses the pause key 2, perform step C04.

The step C04, the dynamic record is paused, the thermal imaging data frames acquired at the moment of responding to the pause indication are held, and the infrared thermal image acquired by the held thermal imaging data frames and the specified amount of the object indicating information is displayed. The user can select the object indicating information.

In step C05, if there is a cancelling indication is determined. If no, perform the next step, and if ye, jump to step C08.

In step C06, if there is determination operation (the mark operation in the embodiment) is determined. If yes, perform the next step, and if no, return to the step C04.

In step C07, the marked frame is associated with the selected object information and the association is recorded. For example, the thermal imaging data frames held in the temporary storage part 6 and the additional information (such as the object information) related to the mark may be written to the dynamic thermal image document built in the storage medium such as the flash memory 9.

In step C08, the thermal imaging data frames without the mark indication are dynamically recorded according to the specified record frame frequency, and may not be associated with the object information in the embodiment.

In step C09, if the process is end is determined. If no, return to the step C01, and users may perform the multiple mark operation.

If end, in step C10, the necessary document additional information (such as the end mark) is written to the dynamic thermal image document, to finish the dynamic thermal image document.

Since the selection of the object information is performed when the dynamic record is paused, the redundant data of the recorded thermal imaging data frames may be reduced. During determination, the held thermal imaging data frames are marked. Thereby, the users can verify the photographing quality of the marked frame and the correction of the selected object information again, thus to improve the quality of the marked frame. Further, when the dynamic record is paused, the display part may display the infrared thermal image acquired by the held thermal imaging data frames and the specified amount of the object information at the moment of responding to the pause indication. In addition, in other modes, the dynamic infrared thermal image and the specified amount of the object information may be displayed, or only the specified amount of the object information may be displayed.

The deformation of the embodiment may be that the selection of the object information may be performed before the step C03.

### Embodiment four

Although the invention in the first embodiment is applied to the thermal imaging device 13 with the photographing function, for the invention, the function of acquiring the thermal imaging data frames by photographing is not necessary, the invention may be applied to a thermal image processing device for receiving and processing the thermal imaging data frames from outside. The thermal image processing device may be a computer, a personal digital assistant (PDA), and a display device used in cooperation with the thermal imaging device with the photographing function. In the fourth embodiment, a thermal image processing device 100 is as an example of the device for dynamically recording thermal images.

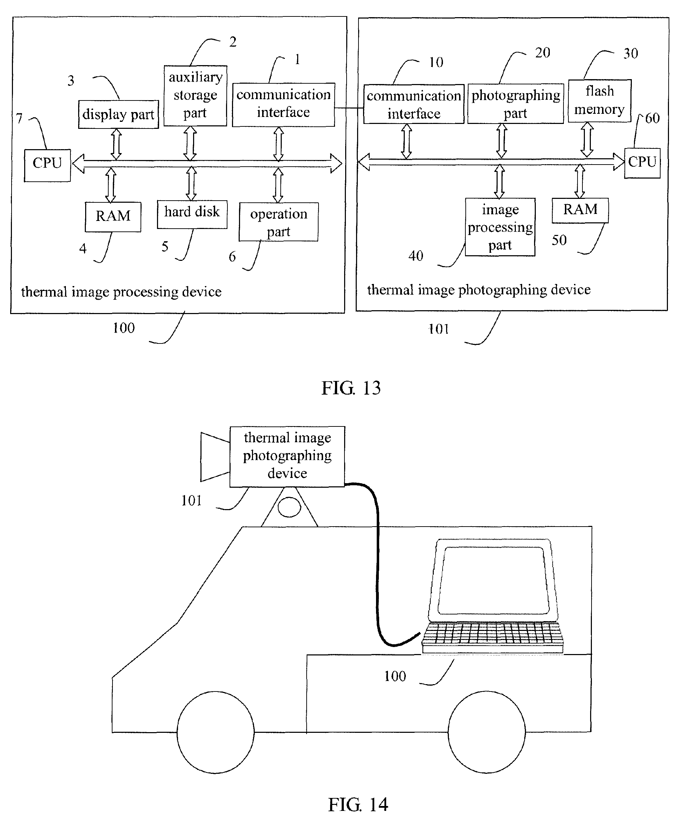

FIG. 13 is a block diagram showing a system for dynamically recording thermal images including the thermal image processing device 100 and a thermal imaging device 101 connected with each other.

The thermal image processing device 100 includes a communication interface 1, an auxiliary storage part 2, a display part 3, a RAM 4, a hard disk 5, an operation part 6, and a CPU 7 connected with the above parts via a bus and for the whole control. The thermal image processing device 100, based on the control of the CPU 7, receives the thermal imaging data frames output by the thermal imaging device 101 connected with the thermal image processing device 100 via the communication interface 1.

The communication interface 1 is used for continuously receiving the thermal imaging data frames output by the thermal imaging device 101, including the thermal imaging data frames transferred by a relay device (the thermal imaging data frames output by the thermal imaging device 101 is transferred by the relay device), and further may be used as a communication interface for controlling the thermal imaging device 101. In the embodiment, the communication interface 1 may be different kinds of wired or wireless communication interfaces on the thermal image processing device 100, such as a network interface, a USB interface, a 1394 interface, or a video interface.

The auxiliary storage part 2 may be a storage medium, such as a CD-ROM or a storage card, and a related interface.

The display part 3 may be a liquid display or other displays connected with the thermal image processing device 100, and the thermal image processing device 100 may not include a display in itself.

The RAM 4 is as a buffer storage for temporarily storing the thermal imaging data frames received via the communication interface 1 and is as a working storage of the CPU 7 for temporarily storing the data processed by the CPU 7. The hard disk 5 stores programs for control and different kinds of data used in the control. The operation part 6 is provided for users to operate. The CPU 7 controls the whole action of the thermal image processing device 100 and performs the function of the image processing part for performing specified processing for the received thermal image data frames to acquire the image data of the infrared thermal image. The specified processing may be modification, interpolation, pseudo-color, synthesis, compression, and decompression, which is the processing for converting to the data suitable for displaying and recording. The CPU 7 performs different processing according to different formats of the thermal image data frames. In one embodiment, for example, when the received thermal imaging data frames are compressed thermal image AD data, the specified processing may be decompression and corresponding specified processing for the thermal imaging data frames received by the acquiring part via the CPU 7. In one embodiment, the specified processing performed for the compressed thermal image AD data after decompression may be pseudo-color, to acquire the image data of the infrared thermal image. In addition, the specified processing may be different specified processing such as modification or interpolation for the decompressed thermal image data frames. In one embodiment, when the received thermal imaging data frames are compressed image data of the infrared thermal image, the image data of the infrared thermal image may be acquired via decompression. In one embodiment, when the communication interface 1 receives the analog infrared thermal image, the digital image data of the infrared thermal image may be acquired after AD conversion via related AD converting circuits.

The thermal imaging device 101 may be a thermal image photographing device of different types, and may be used for photographing objects and outputting the thermal imaging data frames. According to the block diagram of the thermal imaging device 101 in FIG. 12, the thermal imaging device 101 includes a communication interface 10, a photographing part 20, a flash memory 30, an image processing part 40, a RAM 50, and a CPU 60. The CPU 60 controls the whole action of the thermal imaging device 101, and the flash memory 30 stores control programs and data of different kinds used in different control. The photographing part 20 includes an optical part, a driving part, an infrared detector, and a signal preprocessing circuit, which are not shown, and is used for acquiring the thermal image data frames via photographing. The thermal image data frames are temporarily stored in the RAM 50, and then the image processing part 40 (such as a DSP) may perform specified processing such as compression for the photographed thermal imaging data frames to acquire the thermal image data frames and output the thermal imaging data frames via the communication interface 10. In the embodiment, the thermal imaging device 101 is used for photographing and outputting the thermal imaging data frames, with the function similar to the photographing part 1 in the thermal imaging device 13.

FIG. 14 is a schematic diagram showing a thermal image processing system including the thermal image processing device 100 and the thermal imaging device 101 connected with each other. The thermal imaging device 101 is erect on a detection vehicle via an extension ladder, and is connected with the thermal image processing device 100 via communication wires such as special-use cables, or a local area network consisted in a wired or wireless mode. The users can watch and detect the thermal images of objects via the thermal image processing device 100. The thermal imaging device 101 is connected with the thermal image processing device 100 to form the system for dynamically recording thermal images in this embodiment, for photographing the objects.

The structure in the thermal imaging device 13 without the photographing part 1 is generally the same with that in the thermal image processing device 100. Obviously, acquiring the thermal imaging data frames from outside is also suitable for this embodiment. Therefore, the description of the embodiment is omitted. Obviously, the thermal image processing device 100 can be used in coordination with different kinds of thermal imaging devices with the thermal image photographing function, such as different kinds of handheld thermal imaging devices.

### Embodiment five

In the fifth embodiment, the thermal imaging device 13 as shown in FIG. 1 for processing the multiple thermal imaging data frames may be as an example of a replay device, while the replay device may be a thermal image analyzing device without the thermal image photographing function, such as a personal computer or a personal digital processing device.

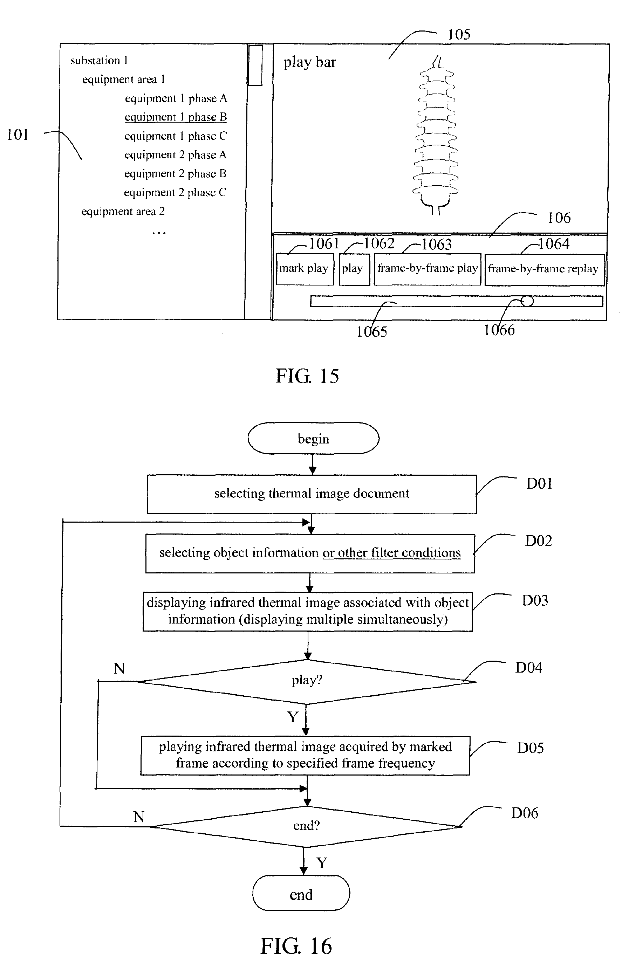

Referring to FIG. 15, an example of the display interface in the fourth embodiment is described.

An object information selecting bar 101 is used for displaying and selecting the object information.

A play bar 105 is used for displaying the infrared thermal image acquired by the selected thermal imaging data frame (or the marked thermal imaging data frame).

A play operating bar 106 is used for performing operation related to the play.

Mark play 1061 is used for playing the marked frame and includes menu options, such as a pause option, which are not shown, for controlling the play.

Play 1062 is used for performing the play and includes menu options, such as a pause option, which are not shown, for controlling the play.

Frame-by-frame play 1063 is used for determining to play forwards frame by frame.

Frame-by-frame replay 1064 is used for determining to play backwards frame by frame.

A progress bar ruler 1065 is used for displaying a ruler of the selected thermal imaging data frame, and may further display the frame time sequence information such as the frame amount.

A progress cursor 1066 is used for displaying the progress of the currently displayed thermal imaging data frame in the play sequence, and may further display the frame time sequence information of the currently displayed thermal image, such as a frame number and time.

Referring to FIG. 16, the control flows of this embodiment are described.

In step D01, a plurality of thermal imaging data frames to be processed are selected. For example, a dynamic thermal image document may be selected from a storage medium such as the storage card 8.

In step D02, the object information is selected. As the object information selecting bar 101 is shown in FIG. 15, the users can perform the selection. The object information to be selected may be acquired from the selected dynamic thermal image document or may be acquired according to the list in FIG. 4 stored in the storage medium of the thermal imaging device 13.

In step D03, the infrared thermal image acquired by the marked frame associated with the selected object information is displayed.

When there are a plurality of the marked frames, a plurality of infrared thermal images can be displayed at the same or may be displayed according to an operating sequence. The object information selected by the users may be "substation 1" or "substation 1, equipment area 1" in FIG. 15, and may not be limited to the complete object information such as "substation 1 equipment area 1 equipment 1 phase B".

In FIG. 15, when a user selects "equipment 1 phase B" belonging to the substation 1 and the equipment area 1, the display controlling part searches the thermal imaging data frame associated with "substation 1 equipment area 1 equipment 1 phase B" from the thermal imaging data frames, such as first searching if there is the marked frame associated with the object information.

For example, when the information of the marked frame of the dynamic thermal image document is located in the document management information of the dynamic thermal image document, the searching operation may be based on the document management information. For example, when the information of the marked frame of the dynamic thermal image document is located in the index information of the dynamic thermal image document, the searching operation is based on this document.

Then, in the play bar 105, the infrared thermal image acquired by the marked frame associated with "substation 1 equipment area 1 equipment 1 phase B" is displayed. The users can perform analysis settings to perform careful analysis, or can perform play operation by selecting the frame-by-frame replay and frame-by-frame paly. In other embodiments, if there is no marked frame, other frames associated with "substation 1 equipment area 1 equipment 1 phase B" may be searched, and then may be displayed.

In step D04, if "play" or "mark play" is performed is determined. If yes, perform step D05, and the infrared thermal images acquired by the specified frames are displayed according to a specified display frame frequency in turn.

In one example, the selected dynamic thermal image document includes the common frames and the marked frames associated with the object information, or further includes the common frames that are not associated with the object information. The thermal imaging data frames associated with the object information with which the previously selected marked frame is associated may be configured to only play, especially facilitating the targeted examination. In another example, the selected dynamic thermal image document includes the marked frames associated with the object information and the common frames that are not associated with the object information. At that moment, the thermal imaging data of the specified amount of the adjacent frames may be configured to play. In other examples, according to the selected "mark play 1061", all marked frames may be played according a sequence determined by a play sequence rule.

In step D06, if end is determined. If no, return to step D02, if the object information is selected, the next step is performed, and repeat the subsequent steps when the users select the object information again. If yes, end.

The above embodiment is not limited to select one dynamic thermal image document. A plurality of thermal image picture documents (each thermal image picture document includes one thermal imaging data frame), one or more dynamic thermal image document, or one thermal image picture document and one or more dynamic thermal image document may be selected. In other examples, a plurality of thermal image documents at different periods may be selected.

The above play may be performed according to a sequence determined by a play sequence rule. The play sequence rule may be that the play sequence is determined according to one or more factors such as if the specified key word of the object information is same or not, time sequence, or the same dynamic thermal image document. The play sequence rule may be predetermined.

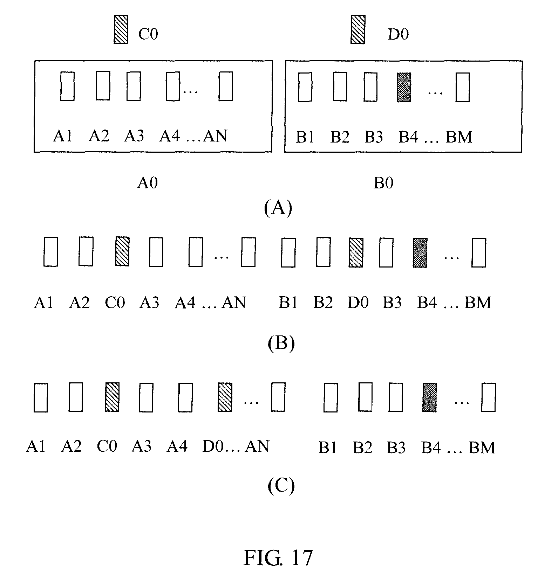

As shown in FIG. 17 (A), a user selects two thermal image picture documents C0, D0 and two dynamic thermal image documents A0, B0, the photographing time of the thermal image picture document C0 is located between a frame A2 and a frame A3 in the frame time sequence of the dynamic thermal image document A0, and the photographing time of the thermal image picture document D0 is located between a frame B2 and a frame B3 in the frame time sequence of the dynamic thermal image document B0.

The play sequence may be acquired according to the frames and the time sequence in the same dynamic thermal image document where the thermal image picture document can be inserted into, as shown in FIG. 17 (B).

In another example, supposing that the object information associated with C0, D0 is the same with that associated with the frames A1 to A4 in the dynamic thermal image document A0, if the principle of the same object information is considered for sequence priority, the sequence as shown in FIG. 17 (C) may be acquired, thereby facilitating the users to perform the past comparison of the photographed same object and the horizontal comparison of the objects of the same type during playing.

Obviously, even if the photographing time of A0 and B0 overlaps, the satisfied play effect may be acquired via different variations of the above sequence. Preferably, the thermal image picture document may be as the marked frame in the new sequence. That is, the marked frames in the new sequence are C0, D0, and B4 (the original marked frame in the BO).

The dynamic thermal image documents and the thermal image picture documents may be acquired by different thermal image photographing devices or the thermal image photographing devices with different parts via photographing. According to different applications, there are different suitable rules for the play sequence.

The deformation may be that based on the selected thermal imaging data frames, according to the selected object information, the thermal imaging data frames associated with the object information are played.

The deformation may be that based on the selected thermal imaging data frames, all marked frames are played.

### Embodiment six

Preferably, according to the selected thermal imaging data frames, a characteristic curve may be formed, and the position of the marked frame on the characteristic curve may be indicated, to further improve the pertinence of the examination and analysis.

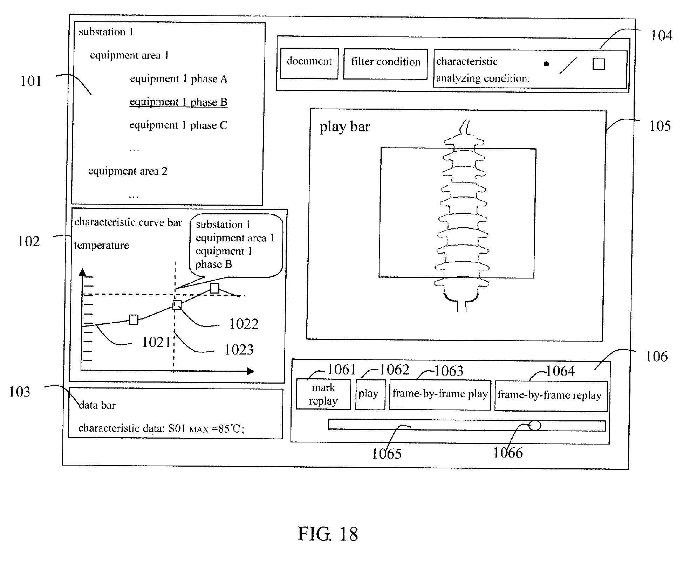

Referring to FIG. 18, an example of the display interface in the sixth embodiment is described.

An object information selecting bar 101 is used for displaying and selecting the object information.

A characteristic curve bar 102 is used for displaying a coordinate system of a characteristic curve, a characteristic curve 1021, a mark 1022 of the marked frame, and a cursor 1023.

The mark 1022 of the marked frame may be preferably displayed on the characteristic curve, based on the frame time sequence information of the thermal imaging data frames (and/or the thermal image picture document) marked in the specified frames, which is very visualized.

The cursor 1023 is provided for users to adjust or set the position of the cursor, preferably to control the data bar and/or the play bar to change the display. That is, the analysis bar displays the characteristic data of the thermal imaging data frame to which the cursor position corresponds, or the characteristic data of the thermal imaging data frame to which the cursor position corresponds may be displayed in adjacent to the cursor. The play bar displays the infrared thermal image to which the cursor position corresponds, and the corresponding thermal imaging data frame may be determined according to the frame time sequence of the cursor position.

A data bar 103 is used for displaying the information related to the selected thermal imaging data frame and/or the information related to the thermal imaging data frame to which the cursor 1023 corresponds. The information related to the thermal imaging data frame to which the cursor 1023 corresponds may also be displayed at other specified positions of the display part, preferably, in adjacent to the characteristic cursor 1023, such as at the upper side of the cursor, thus to be convenient for the users to examine. The related information may be the associated information of the thermal imaging data frame, and it may be preferably displayed in adjacent to the characteristic cursor 1023, such as at the upper side of the cursor, thus to be convenient for the users to examine, such as the object information displayed at the upper side of the cursor 1023.

A setting bar 104 includes:
a document menu option for selecting a thermal image document to be analyzed from the storage medium;
a filter condition menu option for setting the filter condition of the thermal imaging data frames related to the generation of the characteristic curve, such as to acquire and generate the specified frames related to the characteristic curve by filtering the selected thermal image document according to the specified filter condition; the filter condition being a sampling frame amount, a sampling interval, a thermal image picture document, a marked frame, frame additional information or associated information, characteristic data, or a combination thereof, further to filter the selected multiple thermal imaging data frames to acquired the specified frames;
a characteristic analyzing condition menu option for setting the characteristic analyzing condition related to the generation of the characteristic curve. For example, based on the characteristic analyzing condition S01MAX of the set analysis area S01, one or more characteristic analyzing condition may be set.

The play bar 105 and the play operating bar 106 are similar to that in FIG. 15. Therefore, they are not described.

The control part 10 as an analyzing part is used for analyzing the specified frame in the selected thermal imaging data frames according to the specified characteristic analyzing condition, to acquire the characteristic data. The characteristic analyzing condition may be an analyzing area and an analyzing mode related to analysis. The analyzing part performs the analysis based on the analyzing area and the analyzing mode determined by the characteristic analyzing condition. The analyzing area represents a specified analyzing area in the thermal imaging data frame, such as points, lines, or planes, or the whole thermal imaging data frame may be as the analyzing area. The analyzing mode may be to calculate the maximum temperature, the minimum temperature, and the average temperature of an analyzing area, or the temperature difference between different analyzing areas. The characteristic data may be the temperature value acquired by analysis.

The control part 10 as a characteristic curve generating part is used for forming a characteristic curve composed of characteristic points or connected characteristic points in a characteristic curve coordinate system, based on the frame time sequence information of the specified frame time sequence and the characteristic data acquired by analyzing the specified frame. The time sequences of the thermal imaging data frame related to the characteristic curve and the play may be the same or different.

When there are multiple characteristic analyzing conditions, multiple groups of the characteristic data respectively corresponding to the multiple characteristic analyzing conditions may be acquired by analysis. In the characteristic curve coordinate system, the multiple characteristic curves may be formed, and each characteristic curve includes the characteristic points in the same group or the characteristic points in the same group connected with each other.

The y-coordinate of the coordinate system may represent a ruler of the characteristic data, and the x-coordinate may represent the frame time sequence information of the analyzed thermal imaging data frame, such as a frame number or time. The characteristic values of the y-coordinate, the values of the x-coordinate, and a threshold line (when the characteristic data exceeds the threshold line, the object in the exceeding portion of the thermal imaging data frame may have defects) may not be displayed, and the generation and display of the y-coordinate and the x-coordinate may be omitted, which may also be displayed.

The control part 10 as a cursor display controlling part for displaying the cursor correspondingly on the characteristic curve, the x-coordinate of the coordinate system, the y-coordinate of the coordinate system, or a combination thereof. The cursor display controlling part displays the cursor at the located position based on the locating operation of the cursor. The locating operation of the cursor may be that to select the cursor via the operation part 9 to allow the cursor to move, to operate the play progress cursor, or to input specified characteristic data.

The control part 10 as an information display controlling part is used for allowing the display part to display the information related to the thermal imaging data frame to which the cursor position corresponds, such as the characteristic data related to the thermal imaging data frame to which the cursor position corresponds. The characteristic data may be acquired according to the frame time sequence information to which the cursor position corresponds and may be displayed.

The control part 10 as a thermal image display controlling part is used for allowing the display part to display the infrared thermal image acquired by the thermal imaging data frame to which the cursor position corresponds. For example, the infrared thermal image may be acquired by determining the corresponding thermal imaging data frame according to the frame time sequence information to which cursor position corresponds, and may be displayed.

Preferably, the position of the marked frame may be displayed on the characteristic curve. The invention is not limited thereto. The position of the marked frame may be displayed on the characteristic curve, on the x-coordinate of the coordinate system, on the y-coordinate of the coordinate system, or a combination thereof.

Via the embodiment, the key frame can be quickly found, thereby facilitating the subsequent play and browse.

### Other embodiments

The above embodiments are preferable embodiments. Any product performing this embodiment in the invention is not necessary to achieve all of the above advantages at the same time. In addition, this embodiment is taken for example at a scene of object application in power industry, and it also can be widely applied to different infrared detection industry.

Since there are a large amount of the thermal imaging data frames, to reduce the data amount of the recorded thermal imaging data frames, the control part 10 further as a pause control part is used for responding to the specified operation (such as, press the pause key 2) to stop the dynamic record and is used for responding to the specified operation (such as, press the pause key 2 again) to continue the dynamic record in a record pause state, thereby facilitating the subsequent management and processing of the dynamic thermal image document. In addition, the size of the dynamic thermal image document may be further specified. If the dynamic thermal image achieves the specified size is determined. If yes, finish the dynamic thermal image document and build a new dynamic thermal image document for recording the subsequently recorded thermal imaging data frames. Obviously, the specified record frame frequency may not be fixed. In one example, the thermal imaging device 13 further includes a record frame frequency control part for automatically self-adaptively controlling the record frame frequency or indicating the users to change the record frame frequency when the record speed fails to achieve the set record frame frequency. In addition, the specified record frame frequency may be extracted. For example, supposing that the frame frequency of the photographed thermal imaging data frames is 30HZ, when the specified record frame frequency is 6 frames per second, the specified record frame frequency may be realized according to a way that one frame is extracted from five frames.

In addition, the device for dynamically recording thermal images includes a second acquiring part for acquiring other images. The recording part is used for associating other images such as the visible light with the marked thermal imaging data frame and recording the association. Thus, the subsequent examination and analysis is convenient.

In addition, the display part 4 may include at least one display unit, such as the display for displaying the infrared thermal image and the display for especially displaying the object information. The display control of the display controlling part is the simultaneous display on the same display or different displays or the switch display on the same display device.

Further, the device for dynamically recording thermal images may be as one part or functional module in a thermal imaging device or a thermal image processing device with the photographing function. Obviously, when the device for dynamically recording thermal images is as one part of a thermal image photographing device, the display controlling part may be removed.

The above embodiment is described according to a certain step sequence. However, according to different embodiments, the sequence may be different, and it is not limited to the above embodiment. For example, when one or more of the control part 10 and the image processing part 2 includes a plurality of processors, there may be the parallel processing suitable for part steps. The technical persons in the field can change the processing sequence according to the substance of the information.

In preferred embodiments, the additional information of the unmarked thermal imaging data frames and the additional information of the marked frame may be associated with the frame time sequence of the corresponding frame, may be temporarily stored in the temporary storage part, and may be written to the dynamic thermal image document at once when the dynamic record is end, thereby convenient for the subsequent quick search.

The dynamic record is not limited to generate the dynamic thermal image document. In one example, the continuously recorded thermal imaging data frames may generate one thermal image picture document including a thermal imaging data frame and the related additional information, respectively, and may be stored to a specified folder in which the document extension name of the marked frame is different from that of other frames.

Further, the invention may be realized by a computer (or a device such as a CPU, MPU) of a system or equipment executing the function of the embodiment by executing programs recorded on the storage device, and may be realized by a computer of a system or equipment executing the function of the embodiment by reading and executing the programs recorded on the storage device according to the steps. For this objective, the program may be provided to the computer via network or from a record medium (such as a computer readable medium) of different types that is as a storage device.

The invention provides a computer program, and the digital signals composed by the computer program are recorded to a computer readable record medium, such as a hard disk, and a memory. The program is executed to perform the following steps:
an acquiring step for continuously acquiring the thermal imaging data frames;
a selecting step for selecting the object information;
a recording step for responding to the dynamic record indication, associating the information related to the selected object information with the continuously recorded infrared thermal images according to the selected object information, and recording the association; the infrared data frames are the acquired thermal imaging data frames and/or the data acquired after specified processing for the acquired thermal imaging data frames;
a marking step for giving a mark indication;
the recording step for responding to the mark indication and recording by distinguishing the marked infrared data frame from the unmarked infrared data frames.

This embodiment of the invention further provides a readable storage medium for storing a computer program for electronic data exchange. The computer program allows the computer in the thermal imaging device to perform the following steps:
a photographing step for continuously photographing to acquired the thermal imaging data frames;
a selecting step for selecting the object information;
a recording step for responding to the dynamic record indication, associating the related information of the selected object information with the continuously recorded infrared data frames, and recording the association, the infrared data frames are the acquired thermal imaging data frames and/or the data acquired after specified processing for the acquired thermal imaging data frames;
an operating step for performing the mark operation by users;
the recording step for responding to the mark indication generated by the operation and recording by distinguishing the marked infrared data frame from the unmarked infrared data frames.

Although the function block in the drawings may be realized via hardware, software, or the combination thereof, the structure for realizing the function block may not be set in a one-for-one mode. For example, multiple function blocks may be realized via one software or hardware unit, or one function block may be realized via multiple software or hardware units. In addition, the processing and control function of part or all elements in the embodiments of the invention may be realized via special-use circuits, general processors, or programmable FPGA.

The above description is only the embodiments of the invention, and the exemplary description is not for limiting the substantive contents of the invention. Persons having ordinary skill in the art may make other modifications and changes without departing from the substance and scope of the invention after reading the description. Persons having ordinary skill in the art may make other modifications and changes without departing from the spirit of the invention, and the modifications in the scope of the claims may be as one part of the invention.

## Claims

**1.** A device for dynamically recording thermal images, comprising:
a photographing part for continuously photographing to acquire thermal imaging data frames;
a selecting part for selecting object information;
a recording part, in response to a dynamic record indication, based on the selected object information, for associating continuously recorded infrared data frames with the information related to the selected object information and recording the association, the infrared data frames being the acquired thermal imaging data frames and/or data acquired after specified processing for the acquired thermal imaging data frames;
an operation part for performing mark operation by users;
the recording part, in response to a mark indication generated by the operation, for recording by distinguishing the marked infrared data frame from the unmarked infrared data frames.

**2.** A device for dynamically recording thermal images, comprising:
a photographing part for continuously photographing to acquire thermal imaging data frames;
a recording part, in response to a dynamic record indication, for continuously recording infrared data frames, the infrared data frames being the acquired thermal imaging data frames and/or data acquired after specified processing for the acquired thermal imaging data frames;
a selecting part for selecting object information;
an operation part for performing mark operation by users;
the recording part, in response to a mark indication generated by the operation, for associating the marked infrared data frame with the information related to the object information selected by the selecting part and recording the association.

**3.** A device for dynamically recording thermal images, comprising:
an acquiring part for continuously acquiring thermal imaging data frames;
a selecting part for selecting object information;
a recording part, in response to a dynamic record indication, according to the selected object information, for associating the information related to the selected object information with the continuously recorded infrared data frames and recording the association, the infrared data frames being the acquired thermal imaging data frames and/or data acquired after specified processing for the acquired thermal imaging data frames;
a marking part for giving a mark indication;
the recording part, in response to the mark indication, for recording by distinguishing the marked infrared data frame from the unmarked infrared data frames.

**4.** A device for dynamically recording thermal images, comprising:
an acquiring part for continuously acquiring thermal imaging data frames;
a recording part, in response to a dynamic record indication, for continuously recording infrared data frames, the infrared data frames being the acquired thermal imaging data frames and/or data acquired after specified processing for the acquired thermal imaging data frames;
a selecting part for selecting object information;
a marking part for giving a mark indication;
the recording part, in response to the mark indication, for associating the marked infrared data frame with the information related to the object information selected by the selecting part and recording the association.

**5.** The device for dynamically recording thermal images according to any one of claims 1 to 4, wherein the recording part continuously records the infrared data frames according to a specified record frame frequency.

**6.** The device for dynamically recording thermal images according to any one of claims 1 to 4, further comprising:
a display controlling part for displaying a specified amount of object indicating information based on a plurality of object information stored in a storage medium;
the selecting part for selecting the object information in response to selection of users.

**7.** The device for dynamically recording thermal images according to any one of claims 1 to 4, wherein the recording part is capable of recording the marked infrared data frame and the unmarked infrared data frames in one dynamic thermal image document.

**8.** The device for dynamically recording thermal images according to any one of claims 1 to 4, further comprising:
the recording part for stopping the dynamic record processing in response to a pause indication;
a control holding part for holding the infrared data frame corresponding to the moment of the pause indication;
the recording part, in response to the mark indication, being capable of marking the infrared data frame.

**9.** The device for dynamically recording thermal images according to any one of claims 1 to 4, wherein the object information at least reflects a position, a type, a name, a number, or a combination thereof, related to an object.

**10.** The device for dynamically recording thermal images according to any one of claims 1 to 4, wherein the unmarked infrared data frames are related to the object information different from that related to the marked infrared data frame.

**11.** The device for dynamically recording thermal images according to any one of claims 1 to 4, further comprising: a second acquiring part for acquiring other images, the recording part for associating other images with the marked thermal imaging data frame and recording the association.

**12.** The device for dynamically recording thermal images according to any one of claims 1 to 4, wherein the marked thermal imaging data frame is recorded to be distinguished from the unmarked thermal imaging data frames by one or more of the following ways:
1) different document formats; 2) different additional information; 3) different processing modes; 4) different index information or management information; 5) different storage areas; 6) different document names or document extension names; 7) different storage areas of the additional information.

**13.** The device for dynamically recording thermal images according to any one of claims 1 to 2, wherein the recording part records the marked multiple infrared data frames to another dynamic thermal image document.

**13.** A replay device comprising:
a thermal image selecting part for selecting a plurality of thermal imaging data frames;
a selecting part for selecting object information;
a mark replay part for displaying an infrared thermal image acquired by a marked frame associated with the selected object information, based on the selected thermal imaging data frames.

**14.** A replay device comprising:
a thermal image acquiring part for acquiring thermal imaging data frames;
a selecting part for selecting object information;
a replay part for playing an infrared thermal image acquired by the thermal imaging data frame related to the object information according to a specified frame frequency.

**15.** The replay device according to claim 13 or 14, further comprising:
a marked frame selecting part for selecting the marked frame;
a dynamic replay step for playing the infrared thermal image acquired by the thermal imaging data frame related to the marked frame according to the specified frame frequency, according to the selected marked frame.

**16.** The replay device according to claim 13, further comprising:
a characteristic curve display controlling part for forming a characteristic curve formed by characteristic points or by connected characteristic points, based on a frame time sequence of specified frames in the selected thermal imaging data frames and characteristic data acquired by analyzing the specified frames, and indicating the position of the marked frame in the characteristic curve coordinate system, based on the frame time sequence information and/or the characteristic data of the marked frame in the specified frame in the frame time sequence characteristic curve coordinate system;
the marked frame selecting part for selecting the marked frame through selection of the position or mark of the marked frame.

**17.** The replay device according to claim 16, wherein the thermal imaging data frame related to the marked frame at least comprises keywords part or the whole of which is the same with that of the thermal imaging data frame associated with the object information.

**18.** A method for dynamically recording thermal images, comprising:
a photographing step for continuously photographing to acquire thermal imaging data frames;
a selecting step for selecting object information;
a recording step, in response to a dynamic record indication, based on the selected object information, for associating the information related to the selected object information with continuously recorded infrared data frames and recording the association, the infrared data frames being the acquired thermal imaging data frames and/or data acquired after specified processing for the acquired thermal imaging data frames;
an operation step for performing mark operation by users;
the recording step, in response to a mark indication generated by the operation, for recording by distinguishing the marked infrared data frame from the unmarked infrared data frames.

**19.** A method for dynamically recording thermal images, comprising:
a photographing step for continuously photographing to acquire thermal imaging data frames;
a recording step, in response to a dynamic record indication, for continuously recording infrared data frames, the infrared data frames being the acquired thermal imaging data frames and/or data acquired after specified processing for the acquired thermal imaging data frames;
a selecting step for selecting object information;
an operation step for performing mark operation by users;
the recording step, in response to a mark indication generated by the operation, for associating the marked infrared data frame with the information related to the object information selected in the selecting step and recording the association.

**20.** A method for dynamically recording thermal images, comprising:
an acquiring step for continuously acquiring thermal imaging data frames;
a selecting step for selecting object information;
a recording step, in response to a dynamic record indication, according to the selected object information, for associating the information related to the selected object information with the continuously recorded infrared data frames and recording the association, the infrared data frames being the acquired thermal imaging data frames and/or data acquired after specified processing for the acquired thermal imaging data frames;
a marking step for giving a mark indication;
the recording step, in response to the mark indication, for recording by distinguishing the marked infrared data frame from the unmarked infrared data frames.

**21.** A method for dynamically recording thermal images, comprising:
an acquiring step for continuously acquiring thermal imaging data frames;
a recording step, in response to a dynamic record indication, for continuously recording infrared data frames, the infrared data frames being the acquired thermal imaging data frames and/or data acquired after specified processing for the acquired thermal imaging data frames;
a selecting step for selecting object information;
a marking step for giving a mark indication;
the recording step, in response to the mark indication, for associating the marked infrared data frame with the information related to the object information selected in the selecting step and recording the association.

**22.** The method for dynamically recording thermal images according to any one of claims 18 to 21, wherein the recording step is capable of recording the marked infrared data frame and the unmarked infrared data frames in one dynamic thermal image document.

**23.** A replay method, comprising:
a thermal image selecting step for selecting a plurality of thermal imaging data frames;
a selecting step for selecting object information;
a mark replay step for displaying an infrared thermal image acquired by a marked frame associated with the selected object information, based on the selected thermal imaging data frames.

**24.** A replay method, comprising:
a thermal image acquiring step for acquiring thermal imaging data frames;
a selecting step for selecting object information;
a replay step for playing an infrared thermal image acquired by the thermal imaging data frame related to the object information according to a specified frame frequency.

**25.** The replay method according to claim 23 or 24, further comprising:
a marked frame selecting step for selecting the marked frame;
a dynamic replay step for playing the infrared thermal image acquired by the thermal imaging data frame related to the marked frame according to the specified frame frequency, according to the selected marked frame.
